# EUROPEAN PATENT APPLICATION

(11) **EP 1 400 889 A2**
(43) Date of publication of application: **24.03.2004**
(21) Application number: 03380064.0
(22) Date of filing: 20.03.2003
(51) Int. Cl.: G06F 3/023

(54) **Improved keyboard for the configuration of texts**

(30) Priority: 18.09.2002 ES 200202136
(71) Applicant: Uribe-Echevarria Diaz De Mendibil, Gregorio, 48950 Erandio-Bilbao (Vizcaya) (ES)
(72) Inventor: Uribe-Echevarria Diaz De Mendibil, Gregorio, 48950 Erandio-Bilbao (Vizcaya) (ES)
(74) Representative: Ungria Lopez, Javier

(57) **Abstract**

It has application to electronic machines and agendas, calculators, mobile telephones and to any communication equipment, offering a distribution of the keys which facilitates and simplifies the handling of these apparatus. There exist twenty basic keys distributed in five rows and four columns, the five vowels being arranged in the first of the columns and without being accompanied by any further letters. The remaining letters, the consonants, are also assigned an independent key apart from those occupying the lower part of the two inner columns, which have two letters. This distribution is more rational on account of its simplicity of location and follows the same order of known keys, in other words, the order of the entire alphabet is not changed. The numbers are arranged in the known form in the upper part of the first three columns and in the lower part the symbols used for different applications can be located.

## Description

### OBJECT OF THE INVENTION

As stated in the title of this descriptive specification, the present invention refers to a new alphanumeric keyboard for the configuration of texts and which is particularly prepared for being adapted to, for example, electronic machines and agendas, calculators, mobile telephones and any communication equipment, etc.

The purpose of this new keyboard, achieved by means of modifications made in the distribution of the keys, consists of facilitating and simplifying the handling of these devices so that any person can configure a text with just one hand, particularly with a single finger.

The positioning of the different letters and numbers enables a clear practical advantage to be obtained in terms of its use by people who are not accustomed to them, in such a manner that the use of this apparatus for communications, writing of texts, etc., is facilitated by being able to determine the positions of the different keys quickly and simply, and in a way that is more logical.

### BACKGROUND OF THE INVENTION

In keyboards used for writing text, for example those used in electronic agendas or keyboards used in communication apparatus such as mobile telephones, twelve keys are normally used, distributed in three columns and four rows.

In these cases, the established order for the distribution of the letters is the known one, in other words, the vowels are distributed in an order that is mixed with the consonants. So, the vowel "A" is the first letter of a group of three; the vowel "E" is in the middle of another group of three; the vowel "I" is at the end of another group of three, and so on successively.

In general, each key is provided with various letters, specifically three letters per key, with some keys even having four letters.

This distribution and positioning of the letters very often creates problems in order to determine which is the corresponding key that has to be pressed and how many times a key has to be pressed so that the corresponding letter appears. Above all, these problems appear with people who are not used to writing or sending written messages by telephone, given that the handling of them is not simple, which means that these operations are carried out slowly or they are not carried out.

### DESCRIPTION OF THE INVENTION

The new keyboard forming the object of the invention makes a distribution of the letters into a greater number of keys than in previous systems, though it does not overly increase the size of the apparatus where that keyboard is provided, facilitating its handling with just one hand, and with just one finger, and providing some keys which include two letters, while the other keys only have one letter of the alphabet.

In accordance with the invention, there exist twenty keys, distributed in five rows and four columns, the five vowels being arranged in the first of the columns, in other words, one beneath the other, and the other consonants following the established alphabetical order, in such a way that the last key of each row corresponds to the consonant of the alphabet coming immediately before the vowel occupying the first letter of the following row.

In this way, the vowels are separated from the consonants, with one key for each vowel and being arranged in the first column and being the first in each row.

This arrangement of vowels is easier to learn and to remember.

In accordance with the invention, there are some keys that include two letters. Specifically, the third, fourth and fifth rows present some keys with two letters and, in particular, those that are positioned in the second and third columns. Therefore, this positioning of keys with double letters is located in the central part of the keyboard.

The arrangement of the numbers follows the same order of known keys, while other references, signs and symbols currently used are arranged in the last row.

Such an arrangement permits, as in previous systems, handling by means of one hand for gripping the apparatus and acting on the keyboard with a single finger, for example the thumb, and it is not necessary to be accustomed to frequent use since the letters are positioned in a simple way so that the user quickly determines the key that corresponds to each letter, particularly the location of the vowels, which are the ones most used, and without having to press several times on a key in order to make the letter that is wished appear, apart from some of them, located in the central zone of the keyboard, which are easy to identify, thereby making it possible to create words making up a text without the continual need of a task that demands a lot of concentration.

In order to facilitate this present description, attached is a set of drawings on the basis of which the improvements and advantages will be more easily understood.

### BRIEF DESCRIPTION OF THE DRAWINGS

**Figure 1.-** Shows a front view of a mobile telephone apparatus in which the keyboard forming the object of invention has been incorporated.
**Figure 2.-** Shows in detail the keyboard forming the object of the invention with reference to the letters, numbers and other symbols arranged in the corresponding keys.
**Figure 3.-** Shows the keyboard forming the object of the invention arranged in an apparatus in which the window or display where the text appears is located to one side of the keyboard.

### DESCRIPTION OF AN EMBODIMENT OF THE INVENTION

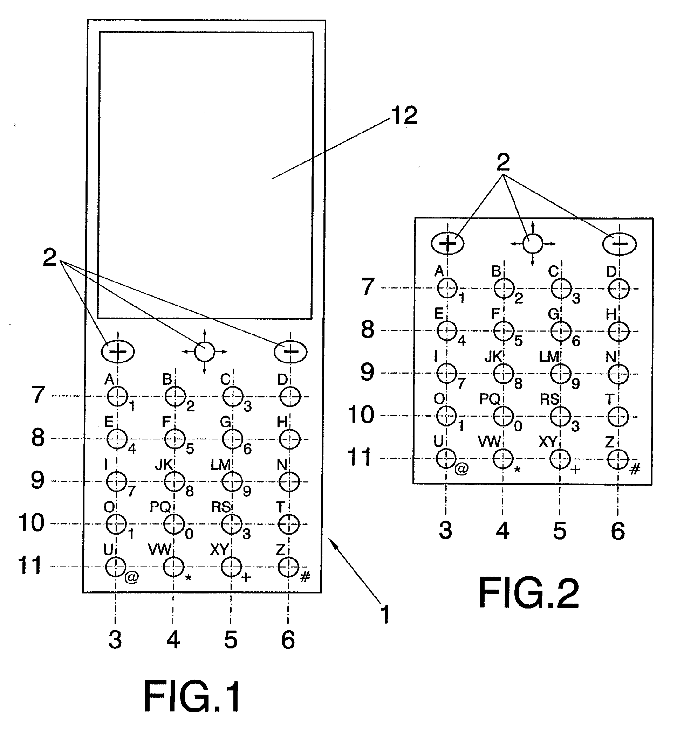

Represented in figure 1 is a front view of the casing of a mobile telephone apparatus in which the keyboard forming the object of the invention has been incorporated. A casing 1 of generally parallelepiped configuration has been provided. In this keyboard there exists a series of keys 2 for the specific use of the telephone.

In accordance with the invention, twenty keys have been distributed in four columns and five rows.

Specifically, a first column 3, a second column 4, a third column 5 and a fourth column 6 have been provided.

Similarly, a first row 7, a second row 8, a third row 9, a fourth row 10 and a fifth row 11 have been provided.

The vowels "A", "E", "I", "O" and "U" are arranged in the first column 3, so that there therefore exists one key for each vowel, with these vowels being arranged at the start of the keyboard.

The other letters, the consonants, are distributed according to alphabetical order, but in such a way that the keys of the last column, in other words the keys of the fourth column 6 correspond to a consonant which is the letter immediately before the vowel heading the following row.

So, for example, the letter "D" is located in the first row 7 and fourth column 6 and this letter is followed by the vowel "E" located in the following row 8.

This different location of the vowels permits a simpler and faster handling in determining the corresponding key, without any great concentration, with those keys furthermore being arranged so that the ones corresponding to vowels, which are generally the ones most used, are located at the start of the keyboard.

All the keys incorporate a single letter, apart from some of them, though, in accordance with the characteristics of the invention, these keys are positioned in the central part of the keyboard and are all grouped in such a way that the identification of these keys is also easy.

Specifically, in the third 9, fourth 10 and fifth 11 rows, and in the second 4 and third 5 columns, the keys include two letters.

So, for example, in the third row 9 a key includes the letter "J" and the letter "K". Another key includes the letter "L" and the letter "M".

In the fourth row 10 a key includes the letters "P" and "Q", and another key includes the letters "R" and "S".

Finally, in the fifth row 11 a key includes the letters "V" and "W", and another key includes the letters "X" and "Y".

In this way the keys that include two letters, which have to be pressed twice in order to the configure a text containing the second of the letters shown in those keys, are located in the centre of the keyboard and grouped in such a way that they can be quickly identified.

The drawing of figure 1 shows a front view of the mobile telephone casing in which the keyboard forming the object of the invention is located beneath the window or display 12 where the text being configured appears.

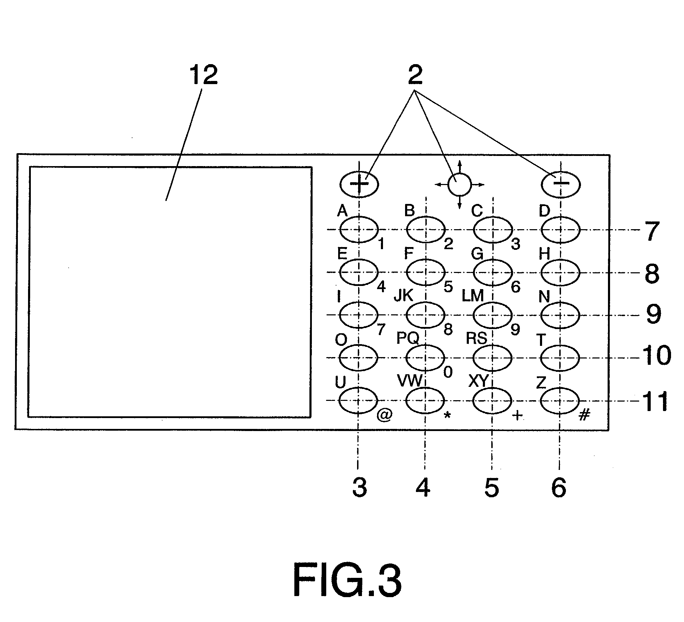

Nevertheless, figure 3 shows that keyboard arranged laterally to the display 12.

In either case, the keyboard can be adapted to various positions depending on its use, which can be different, such as for example for electronic agenda, communications equipment, terminals, etc.

The special arrangement of the keyboard and the distribution of the letters permits easy handling of the keys, and the apparatus can be held in one hand and the text configured with a single finger, such as the thumb, for example.

The numbers are included in the corresponding keys in the known manner and the last row 11 may contain other symbols for different applications.

Figure 3 shows the keyboard for the object of the invention in which the display is located to one side of the keyboard.

It can occur that the apparatus represented in figure 1 is used in landscape rather than vertical format, with which the column where the vowels are included becomes a row, with the advantages that are proposed behave in the same way.

Some letters and mainly the numbers can be printed on the key itself, as is usual.

## Claims

1. **IMPROVED KEYBOARD FOR CONFIGURING TEXTS,** applicable to electronic agendas, communication apparatuses, computers and the like, being manageable with a single finger, comprising a series of keys arranged in a plurality of columns and in a plurality of rows, essentially **characterised in that** vowels are arranged in a first (3) of four columns (3, 4, 5 and 6) in which the keyboard is configured, with one key being provided for each vowel, and consonants being arranged according to alphabetical order and in five rows (7, 8, 9, 10 and 11), where the keys of the first (7), second (8), third (9) and fourth (10) rows located in the fourth column (6) include a single letter, a consonant, which corresponds to the letter alphabetically immediately before the vowel located in the following row which corresponds to the second (8), third (9), fourth (10) and fifth (11) rows, respectively.

2. **IMPROVED KEYBOARD FOR CONFIGURING TEXTS,** according to claim 1, **characterised in that** one key has been provided for each consonant, excepting the keys located in the second (4) and third (5) columns of the third row (9), in the second (4) and third (5) columns of the fourth row (10), and in the second (4) and third (5) columns of the fifth row (11), which include two consonants, therefore these keys including double consonants being located in a central zone of the keyboard.
